# EUROPEAN PATENT APPLICATION

(11) **EP 1 588 613 A1**
(43) Date of publication of application: **26.10.2005**
(21) Application number: 05252412.1
(22) Date of filing: 19.04.2005
(51) Int. Cl.: A01K 87/06

(54) **A reel seat**

(30) Priority: 23.04.2004 GB 0409143
(71) Applicant: FOX INTERNATIONAL GROUP LIMITED, Hainault, Essex IG6 3UT (GB)
(72) Inventor: Fox, Clifford Royston, Danbury, Essex CM3 4PG (GB); Cottis, Maxwell Stewart, Braintree, Essex CN7 9FD (GB)
(74) Representative: Crouch, David John

(57) **Abstract**

A reel seat (10) for releasably retaining an attachment portion of an angling reel when the assembly is in use. The reel seat (10) comprises a tubular portion (12) through which extends a fishing rod when the seat is in use, a first retaining part (20) and a second retaining part (24) both connected to the tubular portion (12), an internally screw-threaded collar (28) extending around the tubular portion (12) and coupled to the second retaining part (24), and at least portions (22) of a screw thread extending around at least a part of the tubular portion (12). The internal screw-threading of the collar (28) engages the said portions (22) of a screw thread to enable rotation of the collar (28) to effect longitudinal movement thereof along the tubular portion (12), in one sense to increase the spacing between the first and second retaining parts (20, 24) to enable such an attachment portion of an angling reel to be positioned between them, and in the opposite sense to decrease the spacing between the first and second retaining parts (20, 24) thereby to retain such an attachment portion between them. Subsequent rotation of the collar (28) in the said one sense enables the attachment portion to be released. The tubular portion (12) is provided with two longitudinally extending slots (23) spaced apart transversely of one another, to enable the tubular portion (12) to flex inwardly when such an attachment portion is held between the first and second retaining parts (20, 24).

## Description

The present invention relates to an adjustable reel seat for securing a reel to a fishing rod.

Fishing reel seats have long been used for attaching reels to fishing rods. The reel comprises an attachment part which is held to the rod by means of a seat. The latter comprises two parts, the first being fixed in position relative to the rod and retaining a front portion of the attachment part, and the second part being movable along the rod towards and away from the fixed part and retaining a rear portion of the attachment part. Such movement is effected by an internal screw thread of a collar engaging a corresponding external screw thread around the outside of a portion of the rod.

A disadvantage of such a construction is that the seat assembly cannot easily be slid along the rod.

The present invention seeks to provide a remedy.

Accordingly, the present invention is directed to a reel seat for releasably retaining an attachment portion of an angling reel when the assembly is in use, the reel seat comprising a tubular portion through which extends a fishing rod when the seat is in use, a first retaining part and a second retaining part both connected to the tubular portion, an internally screw-threaded collar extending around the tubular portion and coupled to the second retaining part, and at least portions of a screw thread extending around at least a part of the tubular portion, the internal screw-threading of the collar engaging the said portions of a screw thread to enable rotation of the collar to effect longitudinal movement thereof along the tubular portion, in one sense to increase the spacing between the first and second retaining parts to enable such an attachment portion of an angling reel to be positioned between them, and in the opposite sense to decrease the spacing between the first and second retaining parts thereby to retain such an attachment portion between them, subsequent rotation of the collar in the said one sense enabling the attachment portion to be released, characterised in that the tubular portion is provided with two longitudinally extending slots spaced apart transversely of one another, to enable the tubular portion to flex inwardly when such an attachment portion is held between the first and second retaining parts.

This is especially, but not exclusively, advantageous in sea fishing, in that it enables the seat to be held securely on a rod, whilst at the same time enabling untightening of the collar to release the grip of the seat on a rod, and sliding of the reel between the handle end of the rod, for casting, and a position which is more central, for playing a fish.

Preferably, both slots are closed at both ends, to provide a strong construction.

Advantageously, the slots are generally parallel to one another. They may be on opposite sides of the tubular portion.

The two slots may be linked by a transverse slot, to provide two tongues of the material of the tubular portion extending towards one another, defined by a generally H-shape slot configuration.

Advantageously, the said portions of a screw-thread comprise a series of substantially transverse generally parallel ridges on the tubular portion extending around only a part thereof. This enables the other side of the tubular portion to be smooth, improving its appearance, reducing the likelihood it will get fouled by dirt, and making the construction more ergonomic.

The present invention extends to an angling rod having a reel seat in accordance with the present invention.

Examples of reel seats embodying the present invention will now be described with reference to the accompanying drawings, in which:
- Figure 1: is a view of one side of a reel seat embodying the present invention;
- Figure 2: is a top view of the seat shown in Figure 1;
- Figures 3 and 4: are resective cross-sectional views on a larger scale of the seat shown in Figures 1 and 2 taken in the planes indicated at the lines III-III and IV-IV respectively shown in Figure 1;
- Figure 5: is an axial sectional view of the seat shown in Figures 1 and 2 taken in the plane indicated by a line V-V shown in Figure 1;
- Figure 6: is a view of one side of a reel seat being a second embodiment of the present invention; and
- Figure 7: is a top view of the seat shown in Figure 6.

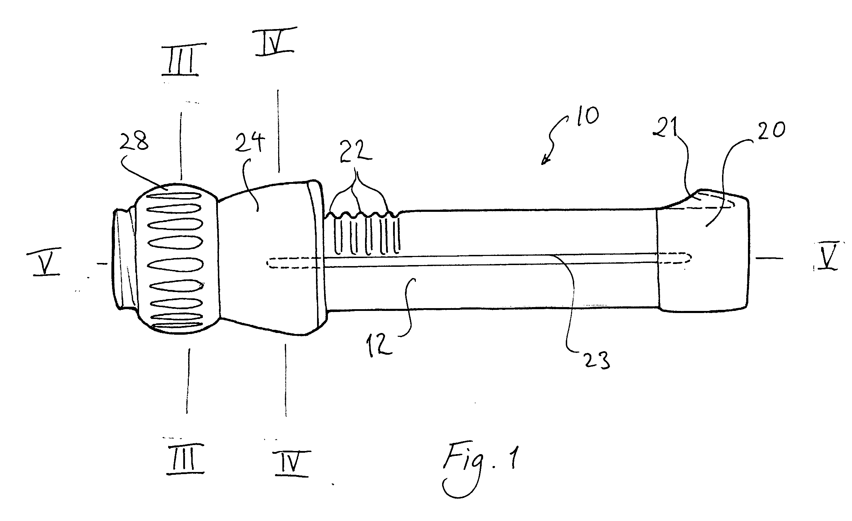

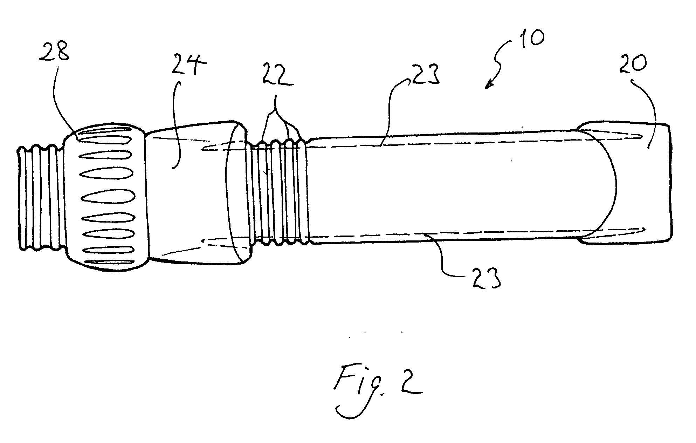

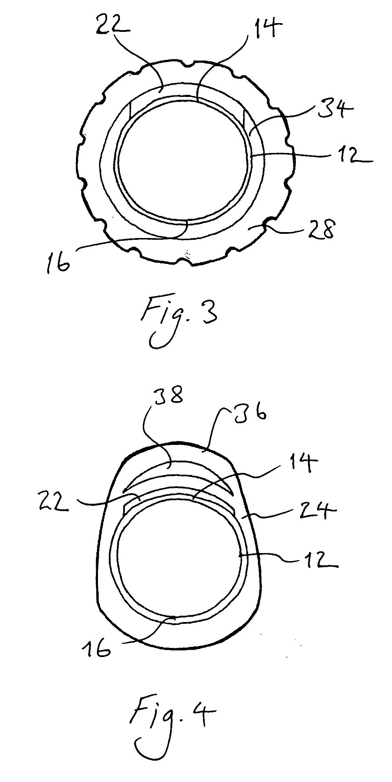

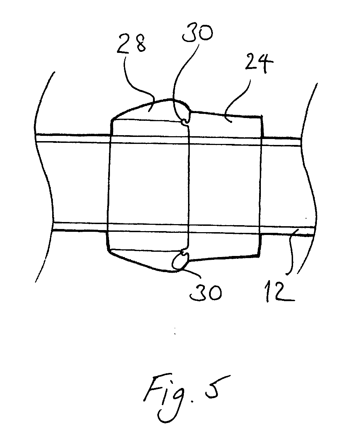

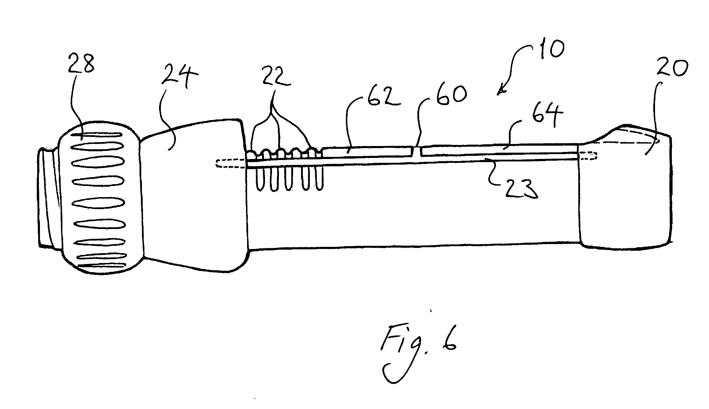

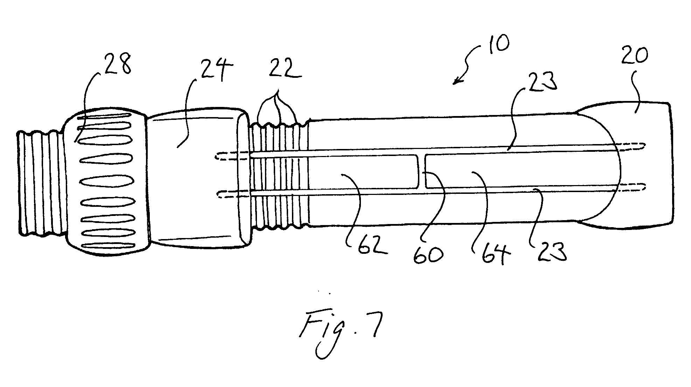

Figures 1 to 5 show a reel seat 10 comprising a tubular plastics or metal body 12 having, as viewed in section as in Figures 3 and 4, an arcuate top 14 and bottom 16 both with the same radius of curvature. The tubular body 12 receives part of an angling rod through it as a close fit when the seat is in use and has secured onto it a fixed front retaining part 20 in the form of a ring with a tapering hollow 21 formed in it which is open at its wider, inner end. A series of transverse parallel ridges 22 protrude from a top 14 of the tubular body 12. Thus, the ridges 22 are eccentric relative to the tubular body 12.

The tubular body 12 is relatively thin and is formed with two linear longitudinally extending slots 23 on opposite sides of the body 12, and on opposite sides of the ridges 22.

A rear retaining part 24 in the form of a sleeve which surrounds the tubular body 12 is free to slide therealong.

The rear retaining part 24 is coupled to a rotatable collar 28 which extends around the tubular body 12. The coupling is effected by interengaging annular rings 30. The inner surface 32 of the rotatable collar 28 is formed with an internal screw thread 34 of the same pitch as the ridges 22. This allows the ridges 22 to interengage with the said screw thread 34, enabling movement of the rear retaining part 24 along the tubular body 12 by rotation of the collar 28. Thus, the ridges 22 lie on respective parts of the helical path defined by the screw thread 34.

The ridges 22 are eccentric to the tubular body 12 and so do not continue around the full circumference thereof.

The rear retaining part 24 is provided with a hood 36 defining a tapering hollow 38 which is also open at its wider, inner end. The hollow 38 is located above the ridges 22 to receive a rear end of an attachment part (not shown) of a reel.

The front end of an elongate attachment part of a reel (not shown) is inserted into the hollow 21 of the front retaining part 20. The rear retaining part 24 is then moved towards the front retaining part 20 by rotation of the collar 28 until the rear end of such an attachment part is held within the hollow 38 of the rear retaining part 24. This movement is continued to secure the reel attachment part (not shown) tightly in place. It will be appreciated that the attachment part (not shown) now covers many of the ridges 22.

Rotation of the collar 28 in the opposite sense, to move the front and rear retaining parts 20 and 24 further apart, enables the reel (not shown) to be released.

In view of the tapering nature of the hollows 21 and 38, the said attachment part is urged inwardly towards the rod. The slots 23 facilitate flexing of the tubular body 12 to facilitate this. The seat is thereby firmly located in a position along the rod. The collar 28 can be loosened to release the grip of the tubular body 12 on the rod and enable the body 12 to be slid along the rod before re-tightening of the collar 28. In this way, the seat can be slid from a position at the handle end of the rod, for casting, to a more central position on the rod, for playing a fish.

Numerous variations and modifications to the illustrated reel seat may occur to the reader without taking the device outside the scope of the present invention. For example, a central elongate longitudinal groove may be formed through the ridges 22 to be engaged by an internal protuberance on the rear retaining part 24 to prevent rotation of that part. The two linear slots 23 may be closer together and on the side of the tubular body 12 where the ridges 22 are, and these slots may be joined at their centres by a transverse slot 60 as shown in Figures 5 and 6, to provide two tongues 62 and 64 which extend longitudinally of the body 12 and extend in opposite directions towards one another. These tongues flex inwardly when an attachment part of a reel is secured to the rod by means of the illustrated seat.

## Claims

1. A reel seat (10) for releasably retaining an attachment portion of an angling reel when the assembly is in use, the reel seat (10) comprising a tubular portion (12) through which extends a fishing rod when the seat is in use, a first retaining part (20) and a second retaining part (24) both connected to the tubular portion (12), an internally screw-threaded collar (28) extending around the tubular portion (12) and coupled to the second retaining part (24), and at least portions (22) of a screw thread extending around at least a part of the tubular portion (12), the internal screw-threading of the collar (28) engaging the said portions (22) of a screw thread to enable rotation of the collar (28) to effect longitudinal movement thereof along the tubular portion (12), in one sense to increase the spacing between the first and second retaining parts (20, 24) to enable such an attachment portion of an angling reel to be positioned between them, and in the opposite sense to decrease the spacing between the first and second retaining parts (20, 24) thereby to retain such an attachment portion between them, subsequent rotation of the collar (28) in the said one sense enabling the attachment portion to be released, **characterised in that** the tubular portion (12) is provided with two longitudinally extending slots (23) spaced apart transversely of one another, to enable the tubular portion (12) to flex inwardly when such an attachment portion is held between the first and second retaining parts (20, 24).

2. A reel seat according to claim 1, **characterised in that** both slots (23) are closed at both ends, to provide a strong construction.

3. A reel seat according to claim 1 or claim 2, **characterised in that** the slots (23) are generally parallel to one another.

4. A reel seat according to any preceding claim, **characterised in that** the slots (23) are on opposite sides of the tubular portion (12).

5. A reel seat according to any preceding claim, **characterised in that** the two slots (23) are linked by a transverse slot (60), to provide two tongues (62, 64) of the material of the tubular portion (12) extending towards one another, defined by a generally H-shape slot configuration (23, 60).

6. A reel seat according to any preceding claim, **characterised in that** the said portions (22) of a screw-thread comprise a series of substantially transverse generally parallel ridges on the tubular portion (12) extending around only a part thereof.

7. An angling rod having a reel seat as claimed in any preceding claim.
